# EUROPEAN PATENT APPLICATION

(11) **EP 3 431 351 A1**
(43) Date of publication of application: **23.01.2019**
(21) Application number: 17766221.0
(22) Date of filing: 17.02.2017
(51) Int. Cl.: B60S 1/08, H02P 6/00

(54) **MOTOR CONTROL DEVICE AND MOTOR UNIT**

(30) Priority: 16.03.2016 JP 2016052153
(71) Applicant: Mitsuba Corporation, Kiryu-shi, Gunma 376-8555 (JP)
(72) Inventor: KOJIMA Naoki, Kiryu-shi Gunma 376-8555 (JP); ANNAKA Tomohiko, Kiryu-shi Gunma 376-8555 (JP)
(74) Representative: Cabinet Laurent & Charras
(86) International application number: PCT/JP2017/005953
(87) International publication number: WO 2017/159214

(57) **Abstract**

A motor control apparatus that controls a brushless motor which operates a wiper arm so as to swing, the motor control apparatus including: a position detection part that detects a rotation position of a rotor; and a control part that performs a sine wave drive of the brushless motor at a time of a low output mode in which an output of the brushless motor is low and that, at a time of a high output mode in which an output is higher than an output at the time of the low output mode, allows a power distribution angle to be an angle that is larger than 120 degrees and distributes power to the brushless motor at a timing when a predetermined electric angle is advanced with reference to the rotation position of the rotor.

## Description

### TECHNICAL FIELD

The present invention relates to a motor control apparatus and a motor unit.

Priority is claimed on Japanese Patent Application No. 2016-052153 filed on March 16, 2016, the contents of which are incorporated herein by reference.

### BACKGROUND

In the related art, a wiper motor as a drive source for swinging a wiper arm is used for a wiper apparatus that is provided on a vehicle. By driving the wiper motor, the wiper apparatus operates the wiper arm so as to swing in a predetermined range on a windshield and wipes dust, raindrops, or the like attached to the windshield.

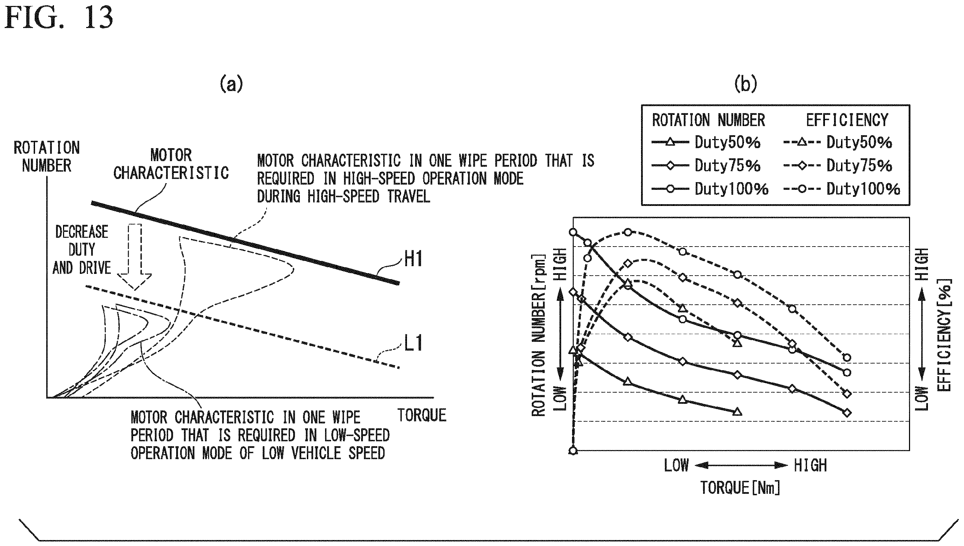

In general, the wiper apparatus includes a low-speed operation mode in which, by driving the wiper motor at a low speed, a wiper blade is operated at a low-speed and a high-speed operation mode in which, by driving the wiper motor at a high speed, the wiper blade is operated at a high speed. Part (a) of FIG. 13 is a schematic view showing an example of motor characteristics required for the wiper motor in the high-speed operation mode and the low-speed operation mode.

In part (a) of FIG. 13, a region that is surrounded by a dotted line shows a motor characteristic that is required in the high-speed operation mode at high-speed travel in which a load of the wiper motor is the highest, and each of two regions that are surrounded by a dashed line shows a type of a motor characteristic that is required in the low-speed operation mode at low-speed travel.

As shown in part (a) of FIG. 13, in the motor characteristic that is required in the high-speed operation mode, a speeding-up of the rotation speed of the wiper motor is required, and in the motor characteristic that is required in the low-speed operation mode, a larger torque is required compared to a case of the high-speed operation mode. Accordingly, between the low-speed operation mode at low-speed travel and the high-speed operation mode at high-speed travel, a load variation of the wiper motor depending on the vehicle speed is large, and therefore, a large difference in the required motor characteristics occurs.

Therefore, when setting the characteristic of the wiper motor as indicated by H1 in part (a) of FIG. 13 so as to obtain the motor characteristic that is required in the high-speed operation mode, the wiper motor may be a motor having a large size or a large mass. Further, when setting the characteristic of the wiper motor as indicated by H1 in part (a) of FIG. 13 so as to obtain the motor characteristic that is required in the high-speed operation mode, in order to obtain the motor characteristic that is required in the low-speed operation mode in a low-speed operation mode time, it is necessary for the wiper apparatus to control the wiper motor to have the characteristic of the wiper motor as indicated by L1 in part (a) of FIG. 13 by decreasing a duty ratio for performing a PWM (pulse-width modulation) control. However, as shown in part (b) of FIG. 13, in general, the efficiency of the motor improves as the duty ratio increases. That is, in the low-speed operation mode, when the duty ratio is decreased, the efficiency of the wiper motor may be decreased.

In order to solve the problems described above, a high-efficiency control method is proposed in which, by performing a sine wave drive without using a duty ratio or while greatly decreasing the duty ratio in a drive of the wiper motor and performing an advance angle control of the wiper motor in a high-speed operation mode time, the wiper motor is rotated at a high speed (for example, Patent Document 1).

### [Related Art Documents]

### [Patent Documents]

[Patent Document 1] Japanese Unexamined Patent Application, First Publication No. 2015-168273

### SUMMARY OF INVENTION

### PROBLEMS TO BE SOLVED BY THE INVENTION

However, when performing sine wave control while adding an advance angle for the wiper motor, the torque is decreased in accordance with an increase of the rotation number. Accordingly, there is a possibility that the rotation number is not increased at the high-speed operation mode in high-speed travel time in which the load is high, and it is impossible to satisfy the required motor characteristic. Therefore, it is necessary to set the characteristic of the wiper motor so as to obtain the motor characteristic that is required in the high-speed operation mode, and at that time, the size of the wiper motor is increased due to the increase in size of a magnet that is used for the wiper motor or the increase of a winding number of an armature coil. Accordingly, it is impossible to downsize the wiper motor.

An aspect of the present invention provides a motor control apparatus and a motor unit capable of downsizing a wiper motor.

### MEANS FOR SOLVING THE PROBLEM

An aspect of the present invention is a motor control apparatus that controls a brushless motor which operates a wiper arm so as to swing, the motor control apparatus including: a position detection part that detects a rotation position of a rotor; and a control part that performs a sine wave drive of the brushless motor at a time of a low output mode in which an output of the brushless motor is low and that, at a time of a high output mode in which an output is higher than an output at the time of the low output mode, allows a power distribution angle to be an angle that is larger than 120 degrees and distributes power to the brushless motor at a timing when a predetermined electric angle is advanced with reference to the rotation position of the rotor.

Further, an aspect of the present invention is the motor control apparatus, wherein the power distribution angle is an electric angle and is in a range of 120 degrees to 180 degrees.

Further, an aspect of the present invention is the motor control apparatus, wherein the control part performs a rectangular wave drive of the brushless motor at the time of the high output mode.

Further, an aspect of the present invention is the motor control apparatus, wherein the low output mode is a mode in which the wiper arm is operated so as to swing at a preset speed, and the high output mode is a mode in which the wiper arm is operated so as to swing at a higher speed than a speed of the low output mode, an operation mode in a case where a vehicle speed is larger than a predetermined value, or an operation mode in a case where a load that is applied to a brushless motor is larger than a predetermined value.

Further, an aspect of the present invention is a motor unit that includes: a brushless motor which operates a wiper arm so as to swing; and a motor control apparatus described above.

### ADVANTAGE OF THE INVENTION

According to an aspect of the present invention, it is possible to provide a motor control apparatus and a motor unit capable of downsizing a wiper motor.

### BRIEF DESCRIPTION OF THE DRAWINGS

FIG. 1 is a view showing an example of a schematic configuration of a windshield 11 of a vehicle 10 on which a wiper apparatus 12 including a motor control apparatus in the present embodiment is provided.
FIG. 2 is a view showing an example of the appearance of a motor unit 19 in the present embodiment.
FIG. 3 is a bottom view of a state where a bottom cover of the motor unit 19 is removed in the present embodiment.
FIG. 4 is a view showing an example of a schematic configuration of a control system of the wiper apparatus 12 in the present embodiment.
FIG. 5 is a view showing an example of a schematic configuration of a control part 54 in the present embodiment.
FIG. 6 is a timing chart showing a power distribution timing of U-, V-, W-phases by a first drive control section 641 in the present embodiment.
FIG. 7 is a timing chart showing a power distribution timing of U-, V-, W-phases by a second drive control section 642 in the present embodiment.
FIG. 8 is a view showing a motor characteristic of a brushless motor 30 in a sine wave drive and an advance-angle / wide-angle power distribution drive in the present embodiment.
FIG. 9 is a view showing a process flow of the control part 54 in the present embodiment.
FIG. 10 is a view showing a modified example of a process flow of the control part 54 in the present embodiment.
FIG. 11 is a view showing a motor characteristic of the brushless motor 30 in the present embodiment.
FIG. 12 is a view showing an example of a waveform obtained by superimposing a harmonic wave on a sine wave of the motor control apparatus in the present embodiment.
FIG. 13 is a schematic view showing an example of a motor characteristic that is required for a wiper motor in a high-speed operation mode and a low-speed operation mode of the related art.

### DESCRIPTION OF THE EMBODIMENTS

Hereinafter, an aspect of the present invention is described according to an embodiment of the invention, but the following embodiment does not limit the invention according to claims. Further, all of the combinations of features described in the embodiment are not necessarily indispensable for solving the problem addressed by the invention. In the drawings, the same reference numerals may be given to the same or similar parts, and redundant descriptions may be omitted.

A motor control apparatus of the present embodiment controls a brushless motor which operates a wiper arm so as to swing. The motor control apparatus performs a sine wave drive of the brushless motor at a time of a low output mode in which an output of the brushless motor is low and that, at a time of a high output mode in which an output is higher than an output at the time of the low output mode, allows a power distribution angle to be an angle that is larger than 120 degrees and distributes power to the brushless motor at a timing when a predetermined electric angle is advanced with reference to a rotation position of a rotor. Hereinafter, the motor control apparatus in the present embodiment is described with reference to the drawings.

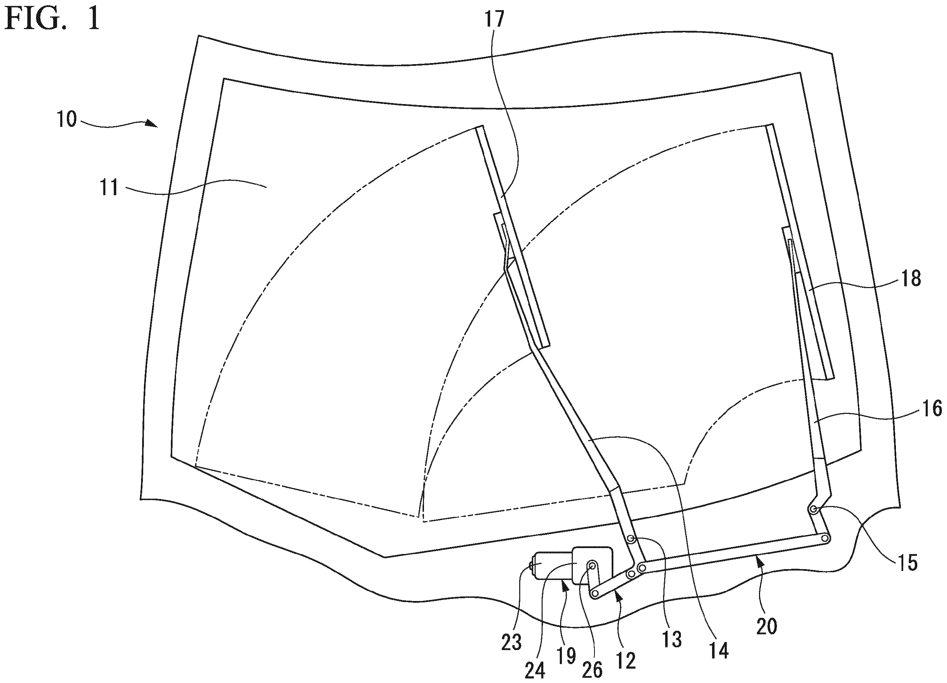

FIG. 1 is a view showing an example of a schematic configuration of a windshield 11 of a vehicle 10 on which a wiper apparatus 12 including the motor control apparatus in the present embodiment is provided.

As shown in FIG. 1, the vehicle 10 includes the windshield 11 and the wiper apparatus 12.

The wiper apparatus 12 wipes the windshield 11.

The wiper apparatus 12 includes wiper arms 14, 16, wiper blades 17, 18, a motor unit 19, and a power transmission mechanism 20.

The wiper arm 14 swings around a pivot shaft 13. The wiper arm 16 swings around a pivot shaft 15.

The wiper blade 17 is attached to a free end of the wiper arm 14. The wiper blade 18 is attached to a free end of the wiper arm 16.

The motor unit 19 drives the wiper arms 14, 16. In the present embodiment, the power of the motor unit 19 is transmitted to the wiper arms 14, 16 individually via the power transmission mechanism 20 that is constituted of a lever, a link, and the like.

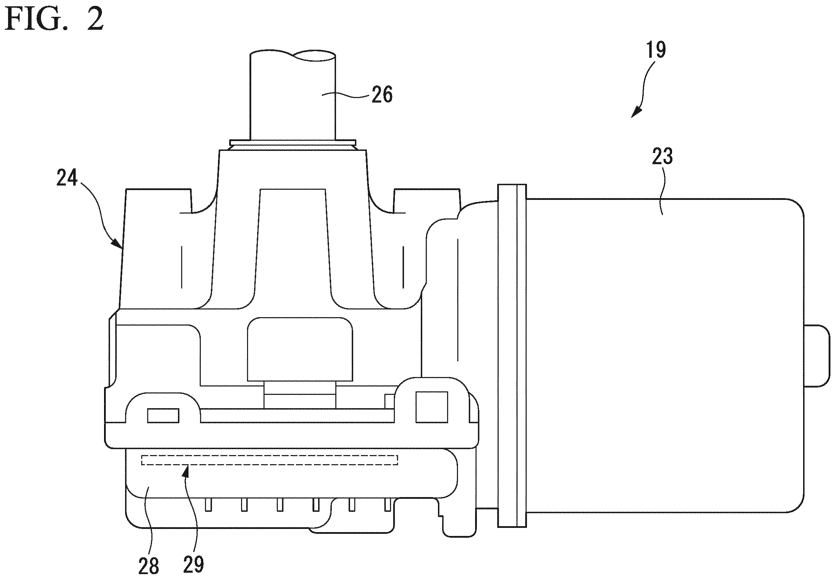

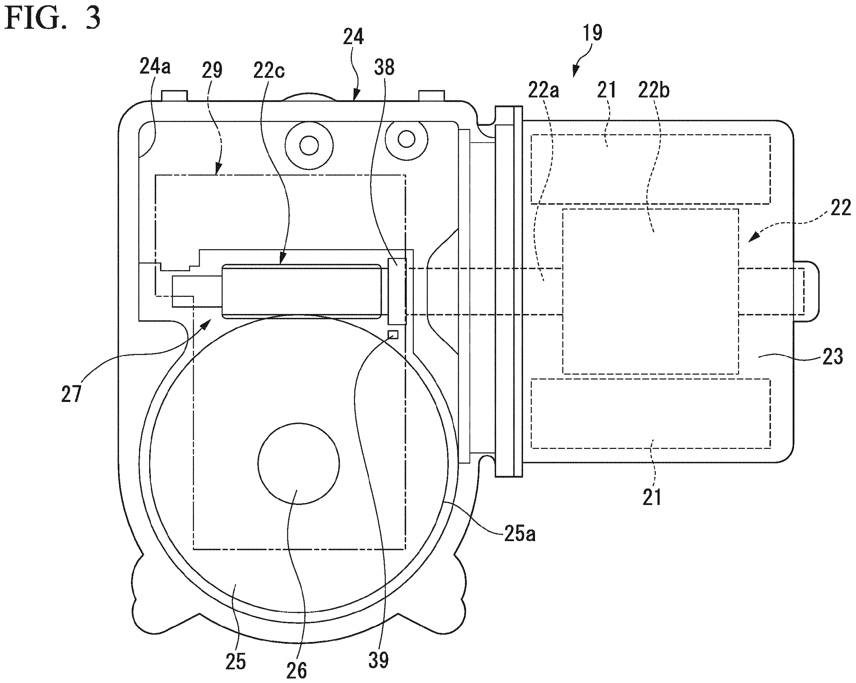

FIG. 2 is a view showing an example of the appearance of the motor unit 19 in the present embodiment. FIG. 3 is a bottom view of a state where a bottom cover 28 of the motor unit 19 shown in FIG. 2 is removed.

As shown in FIG. 2, the appearance of the motor unit 19 is constituted mainly of a case 23 and a frame 24.

The case 23 includes a cylindrical shape having a bottom. The frame 24 includes a hollow shape. The frame 24 and the case 23 are fixed by a fastening member (not shown).

As shown in FIG. 3, the motor unit 19 includes a brushless motor 30, a rotor shaft 22a, an opening part 24a, a worm wheel 25, an output shaft 26, a speed reduction mechanism 27, the bottom cover 28, a control board 29, a sensor magnet 38, and a motor control apparatus 33.

The brushless motor 30 operates the wiper arms 14, 16 so as to swing on the basis of a control command of the motor control apparatus 33.

For example, the brushless motor 30 is a three-phase quadrupolar brushless motor.

The brushless motor 30 includes a stator 21 and a rotor (rotator) 22.

The stator 21 is fixed to an inner circumference of the case 23. The stator 21 includes three-phase armature coils 21u, 21v, 21w. The armature coils 21u, 21v, 21w are wound around the stator 21. For example, the three-phase armature coils 21u, 21v, 21w are connected by a Y-connection in which the coils are connected at a neutral point at one end. Further, the brushless motor 30 is a motor in which each of the armature coils 21u, 21v, 21w functions as both a positive pole and a negative pole.

For example, the rotor 22 is provided on an inner side of the stator 21. The rotor 22 includes a rotor shaft 22a and a quadrupolar permanent magnet 22b that is attached to the rotor shaft 22a. A plurality of bearings (not shown) is provided in the case 23, and the rotor shaft 22a is rotatably supported by the plurality of bearings.

Substantially half in a length direction of the rotor shaft 22a is arranged at an inner part of the case 23, and substantially the other half of the rotor shaft 22a is arranged in the frame 24.

The speed reduction mechanism 27 is formed on an outer circumference of a portion which is arranged in the frame 24 of the rotor shaft 22a. The speed reduction mechanism 27 includes a worm 22c and a gear 25a.

The worm 22c is provided on an outer circumference of the rotor shaft 22a that is arranged in the frame 24. The gear 25a is formed on an outer circumference of the worm wheel 25 that is provided in the frame 24. The gear 25a is engaged with the worm 22c.

The worm wheel 25 is formed so as to be rotated integrally with the output shaft 26. When transmitting the power of the rotor 22 to the output shaft 26, the speed reduction mechanism 27 makes a rotation number (output rotation number) of the output shaft 26 lower than a rotation number (input rotation number) of the rotor 22. Further, in FIG. 2, a shaft hole (not shown) is provided on an upper part of the frame 24. An end part on the opposite side with respect to an end part to which the worm wheel 25 is fixed in the output shaft 26 is exposed to the outside via the shaft hole of the frame 24. The power transmission mechanism 20 is connected to the part which is exposed to the outside of the frame 24 in the output shaft 26 as shown in FIG. 1.

The opening part 24a is provided on a part on the opposite side of the shaft hole in the frame 24. The opening part 24a is formed in order to attach the worm wheel 25 and the like to the inner part of the frame 24. The bottom cover 28 is provided so as to close the opening part 24a. The bottom cover 28 includes a tray shape.

The control board 29 is provided in a space that is surrounded by the bottom cover 28 and the frame 24. As shown in FIG. 2, for example, the control board 29 is attached to the bottom cover 28. The motor control apparatus 33 that controls the brushless motor 30 is provided on the control board 29.

The sensor magnet 38 is provided on a region that is arranged in the frame 24 of the rotor shaft 22a. The sensor magnet 38 is rotated integrally with the rotor shaft 22a. The sensor magnet 38 is magnetized such that north and south poles are alternately arranged along a circumferential direction of the rotor shaft 22a.

Hereinafter, the motor control apparatus 33 in the present embodiment is described with reference to the drawings.

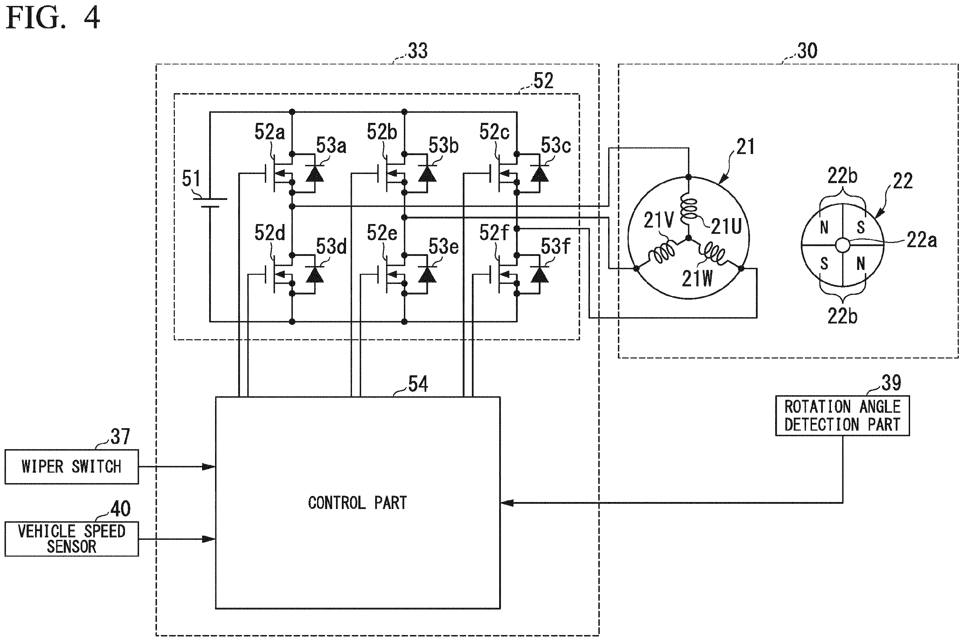

FIG. 4 is a view showing an example of a schematic configuration of a control system of the wiper apparatus 12 in the present embodiment. The wiper apparatus 12 includes a wiper switch 37, a rotation angle detection part 39, a vehicle speed sensor 40, and the motor control apparatus 33.

The wiper switch 37 is provided in a vehicle room of the vehicle 10.

The wiper switch 37 is a switch that operates the wiper arms 14, 16 so as to swing.

The wiper switch 37 is capable of being switched to any of a low-speed operation mode that operates the wiper arms 14, 16 at a low speed (for example, a preset speed), a high-speed operation mode that operates the wiper arms 14, 16 at a higher speed than the speed of the low-speed operation mode, and a stop mode that stops the swing operation of the wiper arms 14, 16.

By being operated by a driver, the wiper switch 37 outputs an operation signal indicating the operation of the driver to the motor control apparatus 33. For example, it is possible for the driver to switch a wipe speed of the wiper arms 14, 16 by operating the wiper switch 37 on the basis of a condition such as the amount of rainfall, the amount of snowfall, and the like. When the amount of rainfall or the amount of snowfall is small, it is possible for the driver to select the low-speed operation mode that operates the wiper arms 14, 16 at a predetermined low speed by operating the wiper switch 37. In this case, the wiper switch 37 outputs a low-speed operation mode signal indicating the low-speed operation mode as the operation signal to the motor control apparatus 33 on the basis of the operation of selecting the low-speed operation mode by the driver.

On the other hand, when the amount of rainfall or the amount of snowfall is large, it is possible for the driver to select the high-speed operation mode that operates the wiper arms 14, 16 at a higher speed than the low speed described above by operating the wiper switch 37. In this case, the wiper switch 37 outputs a high-speed operation mode signal indicating the high-speed operation mode as the operation signal to the motor control apparatus 33 on the basis of the operation of selecting the high-speed operation mode by the driver.

Further, when an operation of stopping the swing operation of the wiper arms 14, 16 is performed to the wiper switch 37 by the driver, the wiper switch 37 outputs a stop mode signal indicating the stop mode as the operation signal to the motor control apparatus 33.

The vehicle speed sensor 40 is provided on the vehicle 10. The vehicle speed sensor 40 measures a travel speed (hereinafter, referred to as a "vehicle speed") V of the vehicle 10. The vehicle speed sensor 40 outputs the measured vehicle speed V of the vehicle 10 to the motor control apparatus 33.

The rotation angle detection part 39 detects a signal that corresponds to the rotation of the rotor 22. For example, the rotation angle detection part 39 includes three Hall ICs, and the Hall ICs are respectively provided at positions magnetically separated by 120 degrees from each other around the rotor shaft 22a. When the rotor 22 is rotated, each of the three Hall ICs outputs each of pulse signals of which the phase is shifted by 120 degrees from one another to the motor control apparatus 33. That is, in accordance with the rotation of the rotor 22, the rotation angle detection part 39 generates a pulse signal on the basis of the change in a magnetic pole of the sensor magnet 38 and outputs the generated pulse signal to the motor control apparatus 33.

The motor control apparatus 33 includes an inverter 52 and a control part 54.

The inverter 52 includes six switching elements 52a to 52f that are connected in a three-phase bridge and diodes 53a to 53f, each of which is connected between a collector and an emitter of each of the switching elements 52a to 52f in an inverse-parallel connection. Each of the switching elements 52a to 52f is, for example, a FET (Field-Effect Transistor) or an IGBT (Insulated-Gate Bipolar Transistor). Each gate of the six switching elements 52a to 52f that are connected in a bridge connection is connected to the control part 54.

The collector or the emitter of the switching elements 52a to 52f is connected to the armature coils 21u, 21v, 21w that are connected in a Y-connection. Thereby, the six switching elements 52a to 52f perform a switching operation on the basis of drive signals (gate signals) that are output from the control part 54 and supply an electric source voltage of a DC electric source 51 that is applied to the inverter 52 as a three-phase (U-phase, V-phase, and W-phase) AC voltage to the armature coils 21u, 21v, 21w.

The control part 54 determines the rotation position of the rotor 22 on the basis of the pulse signal that is supplied from the rotation angle detection part 39. Further, the control part 54 detects the rotation number of the rotor 22 on the basis of the pulse signal. The control part 54 performs a sine wave drive of the brushless motor 30 at the time of the low output mode in which the output of the brushless motor 30 is low. That is, by outputting a first drive signal to the inverter 52, the control part 54 supplies a sine wave current to the armature coils 21u, 21v, 21w and drives the rotor 22 to be rotated. Thereby, it becomes possible to compensate a torque ripple at the time of the low output mode. Therefore, an operation sound of the brushless motor 30 is reduced compared to a pulse-wave drive.

On the other hand, at the time of the high output mode in which the output is higher than the output at the time of the low output mode, the control part 54 allows a power distribution angle to be an angle that is larger than 120 degrees and distributes power to the brushless motor 30 at a timing when a predetermined electric angle is advanced. In the following description, the drive control in which the power distribution angle is allowed to be an angle that is larger than 120 degrees, and power is distributed to the brushless motor 30 at the timing when the predetermined electric angle is advanced may be referred to as an advance-angle / wide-angle power distribution drive. That is, by outputting a second drive signal to the inverter 52, the control part 54 performs the advance-angle / wide-angle power distribution drive for the armature coils 21u, 21v, 21w. That is, the control part 54 generates a large torque for the brushless motor 30 by setting the power distribution angle to be an angle that is larger than 120 degrees, and the control part 54 increases the rotation number of the brushless motor 30 by performing an advance angle control by a predetermined electric angle. Thereby, it becomes possible for the control part 54 to satisfy the motor characteristic that is required in the high output mode. Accordingly, it becomes possible to design the motor characteristic of the brushless motor 30 so as to obtain the characteristic at the time of the low output mode, and therefore, it becomes possible to downsize the brushless motor 30. For example, the low output mode is a mode that operates the wiper arms 14, 16 so as to swing at a low speed, and the high output mode is a mode that operates the wiper arms 14, 16 so as to swing at a high speed or an operation mode in a case where the vehicle speed V of the vehicle 10 is larger than a predetermined value Vth or in a case where a load by wiping the windshield 11 (wipe surface) is larger than a predetermined value. The load at this time is determined by the control part 54 on the basis of the rotation number of the rotor 22 and the duty ratio of the brushless motor 30.

Hereinafter, the control part 54 in the present embodiment is described with reference to the drawings.

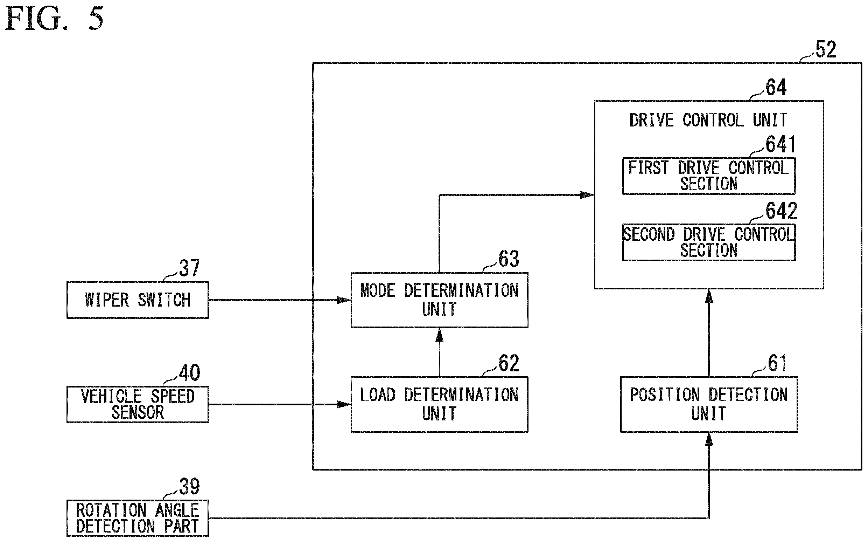

FIG. 5 is a view showing an example of a schematic configuration of the control part 54 in the present embodiment.

The control part 54 includes a position detection unit 61, a load determination unit 62, a mode determination unit 63, and a drive control unit 64.

The position detection unit 61 detects the rotation position of the rotor 22 on the basis of the pulse signal that is supplied from the rotation angle detection part 39. The position detection unit 61 outputs the detected rotation position of the rotor 22 to the drive control unit 64.

The load determination unit 62 determines whether or not the vehicle speed V that is measured by the vehicle speed sensor 40 exceeds the preset predetermined value Vth. When the vehicle speed V that is measured by the vehicle speed sensor 40 exceeds the predetermined value Vth, the load determination unit 62 determines that the load of the brushless motor 30 is a high load. When it is determined that the load of the brushless motor 30 is a high load, the load determination unit 62 outputs a high load signal indicating the determination result to the mode determination unit 63. This is because, when the vehicle speed V of the vehicle 10 is increased, the air flow to the windshield 11 of the vehicle 10 is increased, and the movement of the wiper blades 17, 18 that wipe the windshield 11 is prevented. In this case, it is necessary for the brushless motor 30 to operate the wiper arms 14, 16 so as to swing at a high output. Accordingly, when the vehicle speed V exceeds the predetermined value Vth, the control part 54 generates a large torque for the brushless motor 30 by shifting the mode from the low output mode to the high output mode and increases the rotation number of the brushless motor 30 by performing an advance angle control by a predetermined electric angle with reference to the rotation position of the rotor 22 that is detected by the position detection unit 61.

Further, the load determination unit 62 determines whether or not the rotation number of the rotor 22 that is detected on the basis of the pulse signal which is supplied from the rotation angle detection part 39, a predetermined value of a current value of the brushless motor 30, or a predetermined value that is calculated from both of the rotation number of the rotor 22 and the predetermined value of the current value of the brushless motor 30 exceeds a preset predetermined value. When the rotation number of the rotor 22 that is detected on the basis of the pulse signal which is supplied from the rotation angle detection part 39, the predetermined value of the current value of the brushless motor 30, or the predetermined value that is calculated from both of the rotation number of the rotor 22 and the predetermined value of the current value of the brushless motor 30 exceeds the preset predetermined value, the load determination unit 62 determines that the load of the brushless motor 30 is a high load. When it is determined that the load of the brushless motor 30 is a high load, the load determination unit 62 outputs a high load signal indicating the determination result to the mode determination unit 63. This is because a situation change such as a change in the amount of rainfall occurs, a resistance to the movement of the wiper blades 17, 18 on the windshield 11 (wipe surface) of the vehicle 10 is increased, and the movement of the wiper blades 17, 18 is prevented. In this case, it is necessary for the brushless motor 30 to operate the wiper arms 14, 16 so as to swing at a high output. Accordingly, when the rotation number of the rotor 22, the predetermined value of the current value of the brushless motor 30, or the predetermined value that is calculated from both of the rotation number of the rotor 22 and the predetermined value of the current value of the brushless motor 30 exceeds the preset predetermined value, the control part 54 generates a large torque for the brushless motor 30 by shifting the mode from the low output mode to the high output mode and increases the rotation number of the brushless motor 30 by performing an advance angle control by a predetermined electric angle with reference to the rotation position of the rotor 22 that is detected by the position detection unit 61.

The mode determination unit 63 determines whether the brushless motor 30 is to be driven at the low output mode, the brushless motor 30 is to be driven at the high output mode, or the drive of the brushless motor 30 is to be stopped.

When acquiring the low-speed operation mode signal from the wiper switch 37, the mode determination unit 63 determines that the brushless motor 30 is to be driven at the low output mode and outputs a low output mode signal indicating the low output mode to the drive control unit 64.

When acquiring the high-speed operation mode signal from the wiper switch 37, the mode determination unit 63 determines that the brushless motor 30 is to be driven at the high output mode and outputs a high output mode signal indicating the high output mode to the drive control unit 64. Further, when acquiring the high load signal from the load determination unit 62, the mode determination unit 63 determines that the brushless motor 30 is to be driven at the high output mode and outputs a high output mode signal indicating the high output mode to the drive control unit 64.

When acquiring the stop mode signal from the wiper switch 37, the mode determination unit 63 determines that the drive of the brushless motor 30 is to be stopped and outputs a stop signal indicating the stoppage of the drive of the brushless motor 30 to the drive control unit 64.

The drive control unit 64 includes a first drive control section 641 and a second drive control section 642.

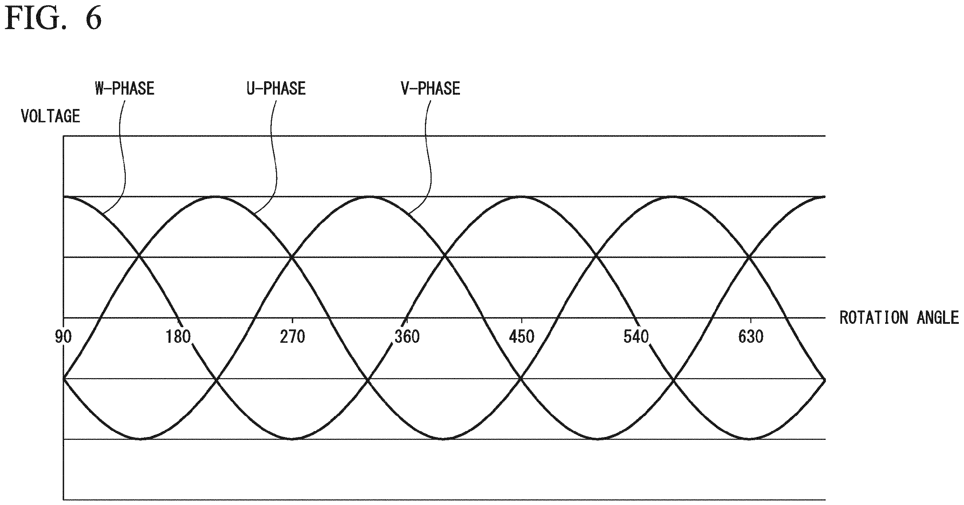

When acquiring the low output mode signal from the mode determination unit 63, the drive control unit 64 performs a sine wave drive of the brushless motor 30 by the first drive control section 641. FIG. 6 is a timing chart showing a power distribution timing of U-, V-, W-phases by the first drive control section 641 in the present embodiment. The first drive control section 641 performs a sine wave drive of the brushless motor 30 by outputting the first drive signal to the inverter 52 at a power distribution timing that corresponds to the rotation position of the rotor 22 which is detected by the position detection unit 61.

On the other hand, when acquiring the high output mode signal from the mode determination unit 63, the drive control unit 64 performs the advance-angle / wide-angle power distribution drive of the brushless motor 30 by the second drive control section 642.

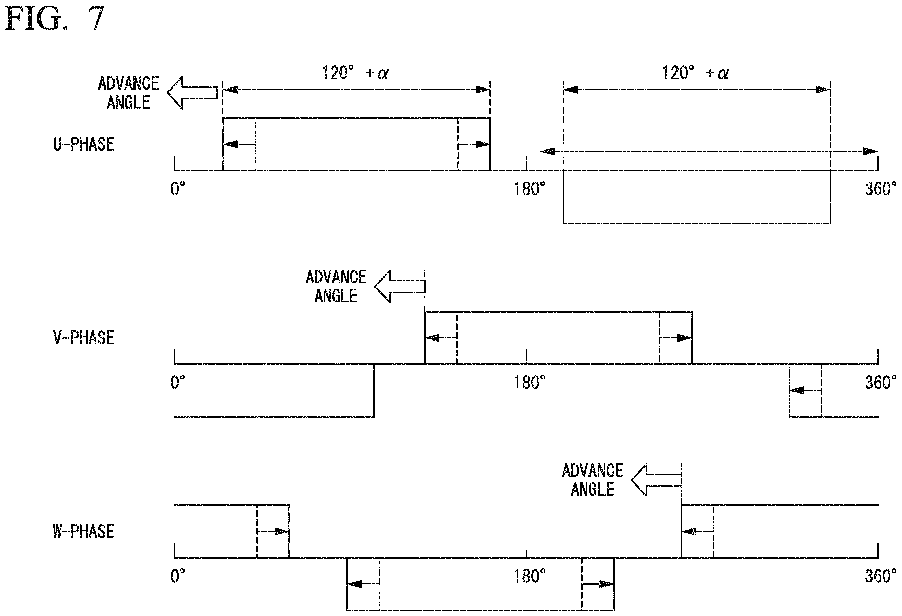

FIG. 7 is a timing chart showing a power distribution timing of U-, V-, W-phases by the second drive control section 642 in the present embodiment.

The second drive control section 642 outputs the second drive signal to the inverter 52 at a power distribution timing when a predetermined electric angle is advanced with reference to the rotation position of the rotor 22 that is detected by the position detection unit 61 while maintaining the power distribution angle to be a power distribution angle of 120 + α (0 degree < α < 60 degrees). That is, the second drive control section 642 simultaneously performs a wide angle power distribution that widen the power distribution angle from 120 degrees and an advance angle control that advances the power distribution timing at which power is distributed to the armature coils 21u, 21v, 21w. Thereby, it becomes possible for the drive control unit 64 to generate a large torque for the brushless motor 30 and increase the rotation number of the brushless motor 30.

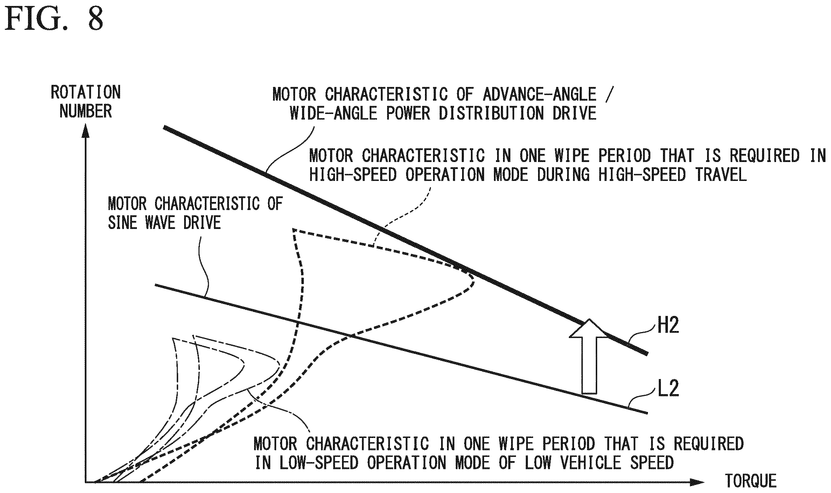

FIG. 8 is a view showing a motor characteristic of the brushless motor 30 in the sine wave drive and the advance-angle / wide-angle power distribution drive in the present embodiment.

In FIG. 8, H2 represents a motor characteristic of the advance-angle / wide-angle power distribution drive. L2 represents a motor characteristic of the sine wave drive. A region that is surrounded by a dotted line shows a motor characteristic in one wipe period that is required in the high-speed operation mode at the time of high-speed travel. Each of two regions that are surrounded by a dashed line shows a type of a motor characteristic in one wipe period that is required in the low-speed operation mode of a low vehicle speed. The motor characteristic in one wipe period represents a motor characteristic when the wiper blade makes a round trip on the windshield 11 (wipe surface).

As shown in FIG. 8, in the low output mode, it is possible for the drive control unit 64 to satisfy the motor characteristic in one wipe period that is required in the low-speed operation mode by performing the sine wave drive and to reduce the operation sound and efficiently drive the brushless motor 30. Further, when the mode is shifted from the low output mode to the high output mode, the drive control unit 64 performs the advance-angle / wide-angle power distribution drive. That is, by increasing the rotation number of the brushless motor 30 by an advance angle control and setting the power distribution angle to an angle that is larger than 120 degrees, it is possible for the drive control unit 64 to prevent the decrease of the torque due to the increase of the rotation number and to generate a high torque. Accordingly, it is possible for the drive control unit 64 to satisfy the motor characteristic in one wipe period that is required in the high-speed operation mode by performing the advance-angle / wide-angle power distribution drive. Thereby, it becomes possible to design the brushless motor 30 on the basis of the motor characteristic that is required in the low-speed operation mode, and it becomes possible to downsize the brushless motor 30 and reduce the weight of the brushless motor 30.

When acquiring a stop signal from the mode determination unit 63, the drive control unit 64 stops the drive of the brushless motor 30 by the first drive control section 641 or the second drive control section 642. That is, when acquiring the stop signal from the mode determination unit 63, the drive control unit 64 stops the drive of the brushless motor 30 and stops the swing operation of the wiper arms 14, 16.

Hereinafter, a process flow of the control part 54 in the present embodiment is described with reference to the drawings.

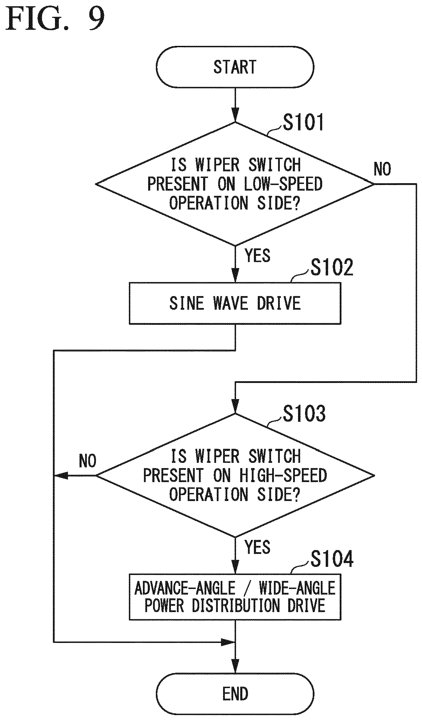

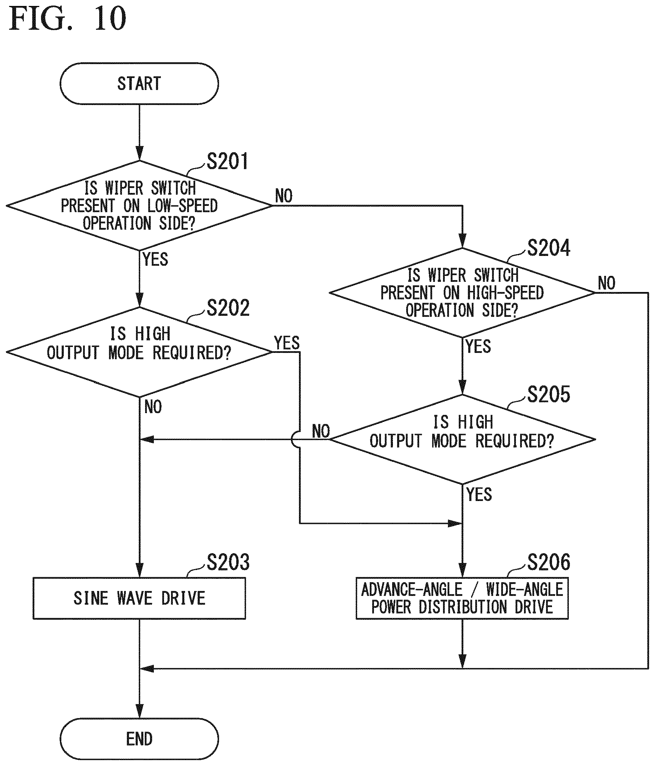

FIG. 9 is a view showing the process flow of the control part 54 in the present embodiment. FIG. 10 is a view showing a modified example of FIG. 9 in the present embodiment.

The control part 54 determines whether or not the driver operates the wiper switch 37 to the low-speed operation side (Step S101). For example, when acquiring the low-speed operation mode signal from the wiper switch 37, the control part 54 determines that the wiper switch 37 is operated to the low-speed operation side. When the wiper switch 37 is operated to the low-speed operation side by the driver, the control part 54 performs the sine wave drive of the brushless motor 30 (Step S102).

On the other hand, when the wiper switch 37 is not operated to the low-speed operation side by the driver, the control part 54 determines whether or not the wiper switch 37 is operated to the high-speed operation side (Step S103). For example, when acquiring the high-speed operation mode signal from the wiper switch 37, the control part 54 determines that the wiper switch 37 is operated to the high-speed operation side. When the wiper switch 37 is operated to the high-speed operation side by the driver, the control part 54 performs the advance-angle / wide-angle power distribution drive of the brushless motor 30 (Step S104).

The process flow of the control part 54 in the present embodiment shown in FIG. 9 may be a process flow of the control part 54 shown in FIG. 10.

The control part 54 determines whether or not the wiper switch 37 is operated to the low-speed operation side by the driver (Step S201). For example, when acquiring the low-speed operation mode signal from the wiper switch 37, the control part 54 determines that the wiper switch 37 is operated to the low-speed operation side. When the wiper switch 37 is operated to the low-speed operation side by the driver, the control part 54 determines whether or not the high output mode is required (Step S202). When it is determined that the high output mode is not required, the control part 54 performs the sine wave drive of the brushless motor 30 (Step S203).

On the other hand, when the wiper switch 37 is not operated to the low-speed operation side by the driver, the control part 54 determines whether or not the wiper switch 37 is operated to the high-speed operation side (Step S204). For example, when acquiring the high-speed operation mode signal from the wiper switch 37, the control part 54 determines that the wiper switch 37 is operated to the high-speed operation side. When the wiper switch 37 is operated to the high-speed operation side by the driver, the control part 54 determines whether or not the high output mode is required (Step S205). When it is determined that the high output mode is required, the control part 54 performs the advance-angle / wide-angle power distribution drive of the brushless motor 30 (Step S206).

Further, when it is determined in the process of Step S201 that the wiper switch 37 is operated to the low-speed operation side, and when it is determined in the process of Step S202 that the high output mode is required, the control part 54 performs the advance-angle / wide-angle power distribution drive of the brushless motor 30. Further, when it is determined in the process of Step S204 that the wiper switch 37 is operated to the high-speed operation side, and when it is determined in the process of Step S205 that the high output mode is not required, the control part 54 performs the sine wave drive of the brushless motor 30.

According to such a configuration, regardless of the wiper switch 37 being on the low-speed operation side or being on the high-speed operation side, it is possible to appropriately switch the mode between the low output mode and the high output mode by the control part 54. Thereby, it becomes possible to respond to a situation change on the windshield 11 (wipe surface) due to a change in external circumstances such as a change in the amount of rainfall, a change in the vehicle speed, and the like.

As described above, in the present embodiment, the motor control apparatus 33 performs the sine wave drive of the brushless motor 30 at the time of the low output mode in which the output of the brushless motor 30 is low and, at the time of the high output mode in which the output is higher than the output at the time of the low output mode, allows the power distribution angle to be an angle that is larger than 120 degrees and distributes power to the brushless motor 30 at a timing based on a predetermined electric angle with reference to the rotation position of the rotor 22 that is detected by the position detection unit 61. In this way, at the time of the frequently used low-speed operation mode, by performing a sine wave drive without using a duty ratio or while greatly decreasing the duty ratio, the motor control apparatus 33 is efficient, and it becomes possible to reduce the operation sound.

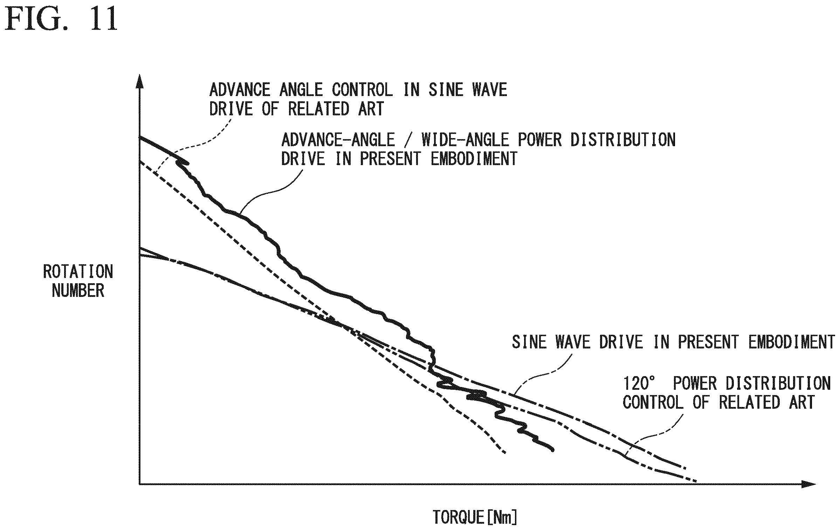

FIG. 11 is a view showing a motor characteristic of the brushless motor 30 in the present embodiment. A solid line indicates a motor characteristic of the advance-angle / wide-angle power distribution drive in the present embodiment. A dotted line indicates a motor characteristic by the advance angle control in the sine wave drive of the related art. A chain line indicates a motor characteristic of the sine wave drive in the present embodiment. A two-dot chain line indicates a motor characteristic by a 120-degree power distribution control of the related art.

As shown in FIG. 11, at the time of the high-speed operation mode that requires a high performance, by performing the advance-angle / wide-angle power distribution drive (solid line) in a rectangular wave control, it is possible for the motor control apparatus 33 to further enhance the motor characteristic compared to the advance angle control (dotted line) in the sine wave drive and satisfy a motor characteristic that is required in the high-speed operation mode. Thereby, it is possible to allow the brushless motor 30 to have a body type in accordance with the motor characteristic that is required in the low-speed operation mode, and it becomes possible to reduce the size and the mass of the motor.

In the embodiment described above, the motor control apparatus 33 determines the rotation position of the rotor 22 on the basis of the pulse signal that is supplied from the rotation angle detection part 39; however, the embodiment is not limited thereto. For example, the motor control apparatus 33 may determine the rotation position of the rotor 22 on the basis of an inductive voltage that is generated at each of the armature coils 21u, 21v, 21w in response to the rotation of the rotor 22. Thereby, the rotation angle detection part 39 that detects the rotation position of the rotor 22 becomes unnecessary, and therefore, it is possible to reduce the number of components and production costs of the brushless motor 30.

Further, in the embodiment described above, the wiper apparatus 12 may include an output shaft sensor that detects at least one of the rotation number and an absolute position of the output shaft 26. The absolute position is a rotation angle of the output shaft 26 relative to a reference position. The reference position may be set to an arbitrary position in a range of 360 degrees. The motor control apparatus 33 may determine the rotation position of the rotor 22 on the basis of a detection signal from the output shaft sensor.

Further, in the embodiment described above, the wiper apparatus 12 is not limited to one that wipes the windshield 11 of the vehicle 10 and may be one that wipes a rear window. Further, the wiper apparatus 12 may have a structure in which the wiper arms 14, 16 swing using the output shaft 26 as a fulcrum point.

Further, in the embodiment described above, the wiper apparatus 12 may have a configuration in which each of the two wiper arms 14, 16 is driven by a different brushless motor. Further, the brushless motor 30 of the present embodiment may be a motor having an IPM (Interior Permanent Magnet) structure or may be a motor having a SPM (Surface Permanent Magnet) structure.

Further, in the embodiment described above, the mode that is selected by the wiper switch 37 is not limited to two categories, namely the low-speed operation mode and the high-speed operation mode, and may be three or more categories. For example, the mode that is selected by the wiper switch 37 may be three categories, namely the low-speed operation mode, a middle-speed operation mode, and the high-speed operation mode. The rotation number of the rotor 22 in the middle-speed operation mode is higher than the rotation number of the rotor 22 in the low-speed wipe mode and is lower than the rotation number of the rotor 22 in the high-speed operation mode. For example, when the middle-speed operation mode is selected by the wiper switch 37, the motor control apparatus 33 may perform the advance angle control in the sine wave drive of the brushless motor 30 or may perform the advance-angle / wide-angle power distribution drive of the brushless motor 30. Here, the power distribution angle in the advance-angle / wide-angle power distribution drive at the time of the middle-speed operation mode is larger than 120 degrees and is narrower than the power distribution angle in the advance-angle / wide-angle power distribution drive at the time of the high-speed operation mode. Alternatively, the electric angle in the advance-angle / wide-angle power distribution drive at the time of the middle-speed operation mode is larger than 0 degrees and is smaller than the electric angle in the advance-angle / wide-angle power distribution drive at the time of the high-speed operation mode.

Further, regardless of the high-speed operation mode, the middle-speed operation mode, and the low-speed operation mode, when it is determined that a load that is applied to the brushless motor 30 is high, the advance-angle-and-wide-angle power distribution drive may be performed (refer to FIG. 10). That is, regardless of the mode that is selected by the wiper switch 37, it is possible to perform the advance-angle-and-wide-angle power distribution drive when acquisition of the high load signal to the mode determination unit 63 is performed.

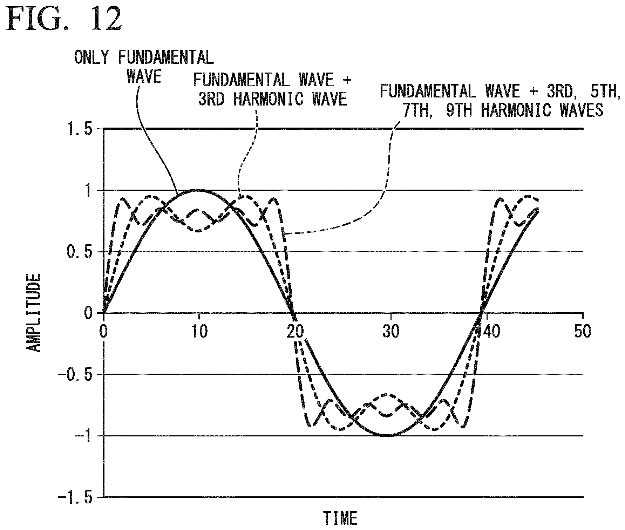

Further, as shown in FIG. 12, when performing the advance-angle / wide-angle power distribution drive of the brushless motor 30, the motor control apparatus 33 in the embodiment described above may generate a pseudo rectangular wave by superimposing a harmonic wave on a sine wave and output the generated rectangular wave to the brushless motor 30.

The control part 54 in the embodiment described above may be realized by a computer. In that case, a program for realizing this function may be recorded in a computer-readable recording medium, and the program recorded in the recording medium may be read into and executed on a computer system to thereby realize the function. The term "computer system" used herein includes an OS or hardware such as peripherals. The term "computer-readable recording medium" refers to portable media such as a flexible disk, a magneto-optical disc, a ROM, and a CD-ROM and a storage device such as a hard disk embedded in the computer system. Further, the term "computer-readable recording medium" may include a recording medium that holds a program dynamically for a short period of time like a network such as the Internet or a communication line when a program is transmitted through a communication line such as a telephone line and may include a recording medium that stores a program for a certain period of time like a volatile memory in a computer system which serves as a server or a client in that case. Further, the above program may be a program for realizing some of the functions described above, may be a program capable of realizing the above functions by the combination with a program already recorded in the computer system, or may be a program that is realized by using a programmable logic device such as the FPGA (Field-Programmable Gate Array).

Further, in the embodiment described above, the control part 54 determines the load to the brushless motor 30 by the rotation number of the rotor 22, the predetermined value of the current value of the brushless motor 30, or the predetermined value that is calculated from both of the rotation number of the rotor 22 and the predetermined value of the current value of the brushless motor 30; however, the means is not limited thereto. For example, the load may be determined by using a current detection apparatus or a torque sensor.

Although an embodiment of an aspect of the invention has been described in detail with reference to the drawings, a specific configuration is not limited to the embodiment, and designs and the like without departing from the scope of the invention are also included.

### DESCRIPTION OF THE REFERENCE SYMBOLS

- 11: windshield
- 12: wiper apparatus
- 19: motor unit
- 54: control part
- 61: position detection unit
- 62: load determination unit
- 63: mode determination unit
- 64: drive control unit
- 641: first drive control section
- 642: second drive control section

## Claims

1. A motor control apparatus that controls a brushless motor which operates a wiper arm so as to swing, the motor control apparatus comprising:
a position detection part that detects a rotation position of a rotor; and
a control part that performs a sine wave drive of the brushless motor at a time of a low output mode in which an output of the brushless motor is low and that, at a time of a high output mode in which an output is higher than an output at the time of the low output mode, allows a power distribution angle to be an angle that is larger than 120 degrees and distributes power to the brushless motor at a timing when a predetermined electric angle is advanced with reference to the rotation position of the rotor.

2. The motor control apparatus according to Claim 1,
wherein the power distribution angle is an electric angle and is in a range of 120 degrees to 180 degrees.

3. The motor control apparatus according to Claim 1 or 2,
wherein the control part performs a rectangular wave drive of the brushless motor at the time of the high output mode.

4. The motor control apparatus according to any one of Claims 1 to 3,
wherein the low output mode is a mode in which the wiper arm is operated so as to swing at a preset speed, and
the high output mode is a mode in which the wiper arm is operated so as to swing at a higher speed than a speed of the low output mode, an operation mode in a case where a vehicle speed is larger than a predetermined value, or an operation mode in a case where a load that is applied to a brushless motor is larger than a predetermined value.

5. A motor unit, comprising:
a brushless motor which operates a wiper arm so as to swing; and
a motor control apparatus according to any one of Claims 1 to 4.
